# EUROPÄISCHE PATENTANMELDUNG

(11) **EP 1 561 621 A2**
(43) Veröffentlichungstag der Anmeldung: **10.08.2005**
(21) Anmeldenummer: 05000305.2
(22) Anmeldetag: 08.01.2005
(51) Int. Cl.: B60J 7/16

(54) **Verfahren zum Herstellen einer Dachklappe und nach dem Verfahren hergestellte Dachklappe**

(30) Priorität: 31.01.2004 DE 102004004887
(71) Anmelder: CTR Fahrzeugtechnik GmbH, 54518 Osann-Monzel (DE)
(72) Erfinder: Cordier, Horst, 54346 Mehring (DE); Gussmann, Udo, 54470 Bernkastel-Kues (DE); Pazen, Kurt, 54492 Zeltingen-Rachtig (DE)
(74) Vertreter: Serwe, Karl-Heinz, Dipl.-Ing.

(57) **Zusammenfassung**

Verfahren zum Herstellen einer Dachklappe (1) und nach dem Verfahren hergestellte Dachklappe (1), insbesondere für einen Getränke-Ausschankwagen.

Bei aufgeklappter Dachklappe (1) hängt die Dachklappe (1) an ihrem vorderen Rand (2) wegen ihrer Größe und ihres Gewichtes durch.

Damit die Dachklappe (1) in aufgeklapptem Zustand nicht durchhängt, wird sie an der Unterseite der vorderen Längsseite derart mit einem Spannband (3) versehen, dass sie in herunterhängender Stellung nach außen gewölbt ist und in aufgeklappter Stellung in einer geraden Linie verläuft.

## Beschreibung

Die Erfindung betrifft ein Verfahren zum Herstellen einer Dachklappe, insbesondere einer Dachklappe für Getränke-Ausschankwagen od. dgl., wobei die Dachklappe mit ihrer hinteren Längsseite schwenkbar mit einem Getränke-Ausschankwagen verbindbar ist und in aufgeklappter Stellung im Abstand von der hinteren Längsseite an ihren Querseiten abgestützt ist.

Werden diese Dachklappen zum Betrieb des Getränke-Ausschankwagens nach oben in etwa horizontale Stellung geschwenkt und nur an den Querseiten abgestützt, so hängen diese Dachklappen auf Grund ihres Gewichtes und ihrer Länge in der Mitte durch. Dies sieht nicht nur sehr unschön aus, sondern führt auch dazu, dass bei Regen das Regenwasser konzentriert in der Mitte der Dachklappe abläuft. Eine zusätzliche Abstützung ist aus optischen Gründen unerwünscht, da dazu eine mittlere Stütze am Getränke-Ausschankwagen angebracht werden müsste. Außerdem würde diese Stütze den Kontakt zwischen Bediener und Gast erschweren.

Die Aufgabe der Erfindung besteht daher darin, eine Dachklappe und ein Verfahren zur Herstellung dieser Dachklappe vorzuschlagen, deren vordere Längsseite in aufgeklapptem Zustand in gerader Linie verläuft.

Diese Aufgabe wird dadurch gelöst, dass die Dachklappe an ihrer vorderen Längsseite derart vorgespannt wird, dass die vordere Längsseite in nach unten geklappter, hängender Stellung an ihrer Ober-/Außenseite nach außen/oben gewölbt ist und in aufgeklappter, im Wesentlicher in horizontaler Stellung gerade verläuft.

Vorteilhaft wird dazu an der Unter-/Innenseite der vorderen Längsseite der Dachklappe ein vorgespanntes Spannband angeordnet.

Vorzugsweise wird zunächst das eine Ende des Spannbandes mit dem einen Ende der vorderen Längsseite der Dächklappe und das andere Ende des Spannbandes lösbar mit einer Spannvorrichtung verbunden, die lösbar am anderen Ende der Längsseite der Dachklappe angeordnet wird, dass anschließend das Spannband mit Hilfe der Spannvorrichtung derart gespannt wird, dass sich die Längsseite der Dachklappe in Bezug zum Spannband nach oben wölbt, und dass dann das Spannband ausgehend von den Enden zur Mitte hin im Abstand mit der Längsseite der Dachklappe fest verbunden wird.

Vorteilhaft wird eine 4000 mm lange Längsseite mit Hilfe der Spannvorrichtung und des Spannbandes derart vorgespannt, dass die Längsseite derart nach oben gewölbt ist, dass in der Mitte der Längsseite die Längsseite einen Abstand von ca. 65 mm vom Spannband hat.

Vorteilhaft wird eine 5000 mm lange Längsseite mit Hilfe der Spannvorrichtung und des Spannbandes derart vorgespannt, dass die Längsseite derart nach oben gewölbt ist, dass in der Mitte der Längsseite die Längsseite einen Abstand von ca. 95 mm vom Spannband hat.

Vorzugsweise wird das Spannband abwechselnd von den Enden zur Mitte hin mit der Längsseite der Dachklappe verbunden.

Bei einer vorteilhaften Dachklappe ist an der Unter-/Innenseite ein vorgespanntes Spannband angeordnet.

Vorteilhaft ist das Spannband im Abstand von ca. 300 mm mit der Längsseite der Dachklappe vernietet.

Vorzugsweise besteht das Spannband aus einer Schiene aus Metall.

Die Erfindung ist in den Zeichnungen beispielhaft dargestellt. Es zeigen:
- Fig. 1: eine Dachklappe mit einseitig befestigtem Spannband in Ansicht auf die Längsseite,
- Fig. 2: die Dachklappe nach Fig. 1 mit angesetzter Spannvorrichtung,
- Fig. 3: die Dachklappe in vorgespanntem Zustand,
- Fig. 4: die Dachklappe mit teilweise vernietetem Spannband,
- Fig. 5: die fertige Dachklappe in hängendem Zustand in Ansicht auf die vordere Längsseite.

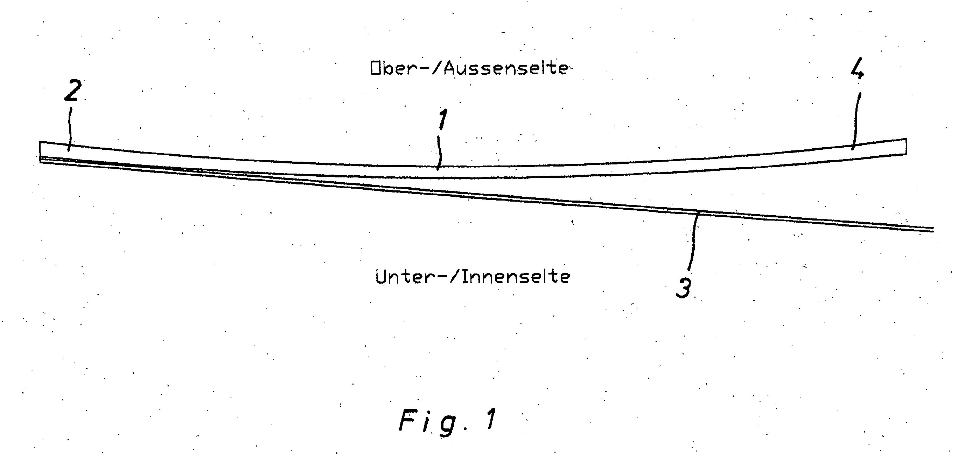

Die Fig. 1 zeigt die vordere Längsseite 1 einer Dachklappe, die an ihren Querseiten abgestützt ist (nicht dargestellt), so dass sich die Dachklappe auf Grund ihres Gewichtes und ihrer Länge nach unten durchwölbt. Mit dem einen Ende 2 der Längsseite 1 ist ein Spannband 3, das als Metallschiene ausgebildet sein kann, fest verbunden.

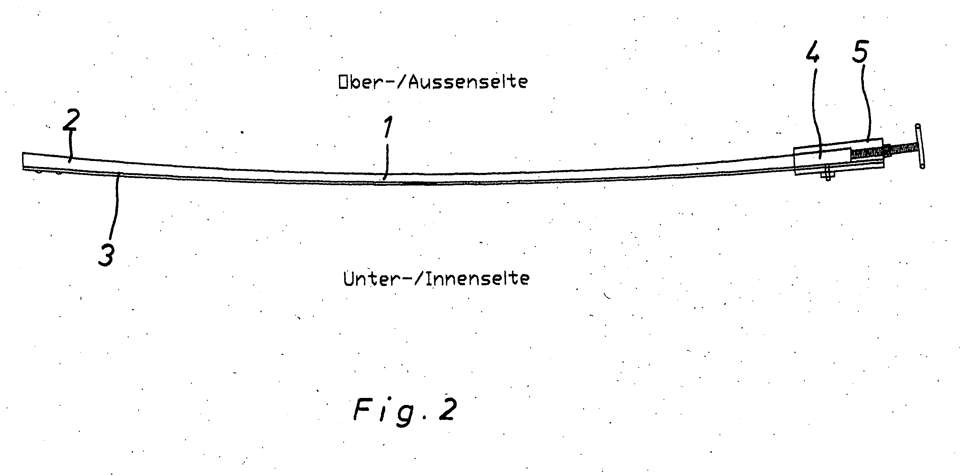

Wie die Fig. 2 zeigt, ist mit dem anderen Ende 4 der Längsseite 1 eine Spannvorrichtung 5 lösbar verbunden, die gleichfalls lösbar mit dem anderen Ende des Spannbandes 3 verbunden ist, so dass das Spannband an der Unterseite der Längsseite anliegt.

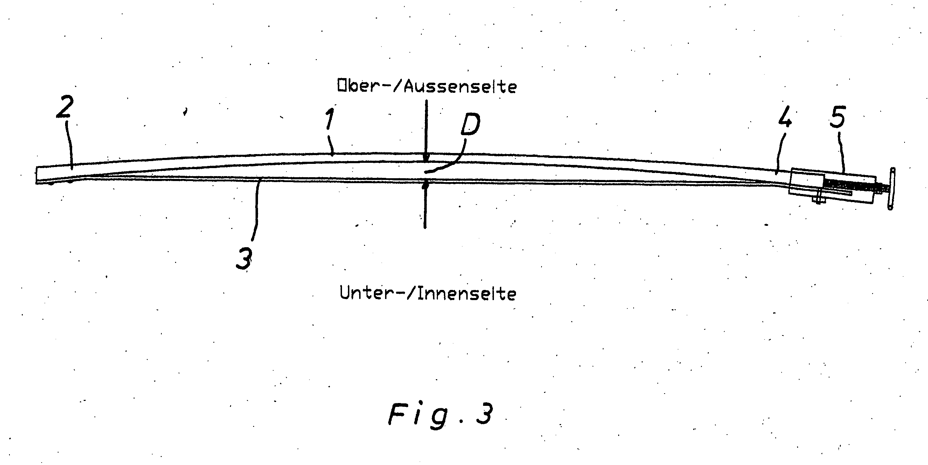

Wird nun das Spannband 3 mit Hilfe der Spannvorrichtung 5 gespannt, so wölbt sich die Längsseite 1 der Dachklappe in Bezug zum Spannband nach oben, wie dies die Fig. 3 zeigt.

Bei einer 4000 mm langen Längsseite 1 einer Dachklappe beträgt dabei der mit D bezeichnete Abstand ca. 65 mm, bei einer 5000 mm langen Längsseite 1 beträgt der mit D bezeichnete Abstand ca. 95 mm.

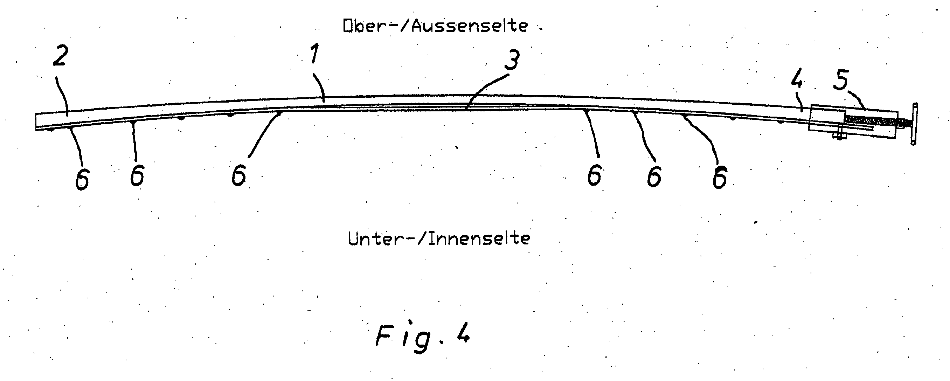

Anschließend wird dann das Spannband 3 in Abständen mit der Längsseite 1 der Dachklappe fest verbunden, beispielsweise mit Hilfe von Nieten 6, wie dies die Fig. 4 zeigt. Dabei wird das Vernieten abwechselnd von den Enden 2 und 4 in einem Abstand von ca. 300 mm vorgenommen.

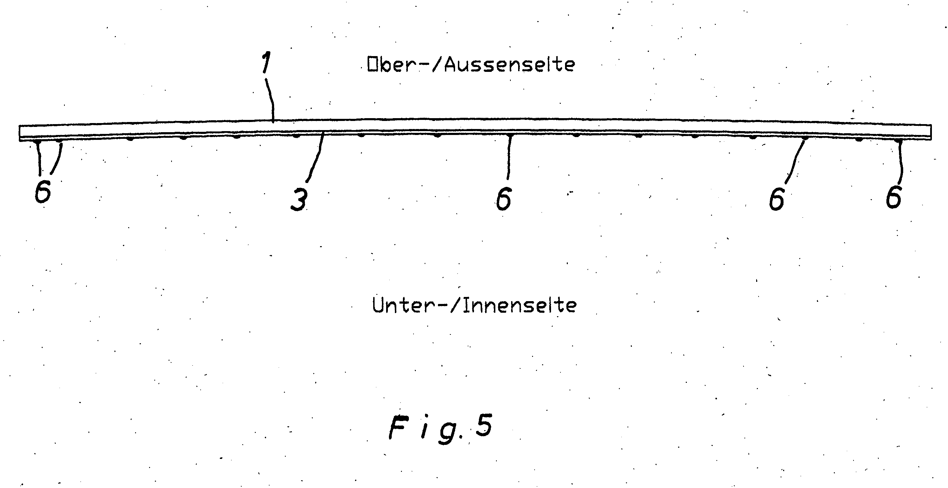

Die Fig. 5 zeigt eine fertig vernietete Dachklappe in hängender, vertikaler Stellung in Ansicht auf ihre vordere Längsseite 1. Wie die Fig. 5 zeigt, ist die Dachklappe leicht nach außen zu ihrer Ober-/Außenseite hin gewölbt. Wird die an einem Getränke-Ausschankwagen mit ihrer hinteren Längsseite schwenkbar befestigte Dachklappe nach oben aufgeklappt, so zeigt die Längsseite 1 auf Grund der Vorspannung eine gerade Linie.

## Patentansprüche

1. Verfahren zum Herstellen einer Dachklappe, insbesondere einer Dachklappe für Getränke-Ausschankwagen od. dgl., wobei die Dachklappe mit ihrer hinteren Längsseite schwenkbar mit einem Getränke-Ausschankwagen verbindbar ist und in aufgeklappter Stellung im Abstand von der hinteren Längsseite an ihren Querseiten abgestützt ist, **dadurch gekennzeichnet, dass** die Dachklappe an ihrer vorderen Längsseite (1) derart vorgespannt wird, dass die vordere Längsseite in nach unten geklappter, hängender Stellung an ihrer Ober-/Außenseite nach außen/oben gewölbt ist und in aufgeklappter, im Wesentlichen horizontaler Stellung gerade verläuft.

2. Verfahren nach Anspruch 1, **dadurch gekennzeichnet, dass** an der Unter-/Innenseite der vorderen Längsseite (1) der Dachklappe ein vorgespanntes Spannband (3) angeordnet wird.

3. Verfahren nach Anspruch 1 oder 2, **dadurch gekennzeichnet, dass** zunächst das eine Ende des Spannbandes (3) mit dem einen Ende (2) der Längsseite (1) und das andere Ende des Spannbandes lösbar mit einer Spannvorrichtung (5) verbunden wird, die lösbar am anderen Ende (4) der Längsseite angeordnet wird, dass anschließend das Spannband mit Hilfe der Spannvorrichtung derart gespannt wird, dass sich die Längsseite der Dachklappe in Bezug zum Spannband nach oben wölbt, und dass dann das Spannband ausgehend von den Enden zur Mitte hin im Abstand mit der Längsseite fest verbunden wird.

4. Verfahren nach Anspruch 3, **dadurch gekennzeichnet, dass** eine 4000 mm lange Längsseite (1) mit Hilfe der Spannvorrichtung (5) und des Spannbandes (3) derart vorgespannt wird, dass die Längsseite derart nach oben gewölbt ist, dass sie in der Mitte der Längsseite einen Abstand von D = 65 mm vom Spannband hat.

5. Verfahren nach Anspruch 3, **dadurch gekennzeichnet, dass** eine 5000 mm lange Längsseite (1) mit Hilfe der Spannvorrichtung (5) und des Spannbandes (3) derart vorgespannt wird, dass die Längsseite derart nach oben gewölbt ist, dass sie in der Mitte der Längsseite einen Abstand von D = 95 mm vom Spannband hat.

6. Verfahren nach Anspruch 3, **dadurch gekennzeichnet, dass** das Spannband (3) abwechselnd von den Enden zur Mitte hin mit der Längsseite (1) der Dachklappe verbunden wird.

7. Dachklappe, hergestellt nach einem der Ansprüche 1 bis 6, **dadurch gekennzeichnet, dass** an der Unter-/Innenseite der vorderen Längsseite (1) der Dachklappe ein vorgespanntes Spannband (3) angeordnet ist.

8. Dachklappe nach Anspruch 7, **dadurch gekennzeichnet, dass** das Spannband (3) im Abstand von ca. 300 mm mit der Längsseite (1) der Dachklappe vernietet ist.

9. Dachklappe nach Anspruch 7 oder 8, **dadurch gekennzeichnet, dass** das Spannband (3) aus einer Schiene aus Metall besteht.
